(19) Europäisches Patentamt / European Patent Office / Office européen des brevets

(11) **EP 4 282 914 A1**

(12) **EUROPEAN PATENT APPLICATION**

(43) Date of publication:
**29.11.2023 Bulletin 2023/48**

(21) Application number: **23167769.1**

(22) Date of filing: **13.04.2023**

(51) International Patent Classification (IPC):
**C08L 21/00** *(2006.01)*       **C08K 3/36** *(2006.01)*
**B60C 9/00** *(2006.01)*

(52) Cooperative Patent Classification (CPC):
(C-Sets available)
**B60C 9/0007**                                   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2022   JP 2022085330**

(71) Applicant: **Sumitomo Rubber Industries, Ltd.
Kobe-shi, Hyogo 651-0072 (JP)**

(72) Inventor: **OKABE, Noboru
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(54) **TIRE**

(57)   A tire comprising a steel cord and a topping rubber covering the steel cord, wherein the steel cord is provided with a ternary plated layer consisting of copper, zinc, and cobalt, wherein the topping rubber is composed of a rubber composition comprising a rubber component and silica, and wherein, when a content of zinc in the ternary plated layer is defined as X (% by mass) and a content of silica based on 100 parts by mass of the rubber component is defined as Y (part by mass), Y/X is 0.50 or more.

EP 4 282 914 A1

(52) Cooperative Patent Classification (CPC): (Cont.)

C-Sets
**C08L 7/00, C08L 91/00, C08K 3/04, C08K 3/36,
C08K 5/548, C08K 5/18, C08K 5/098, C08K 3/22,
C08K 5/09, C08K 3/06, C08K 5/47, C08K 5/31;
C08L 7/00, C08L 91/00, C08L 61/14, C08L 61/28,
C08K 3/04, C08K 3/36, C08K 5/548, C08K 5/18,
C08K 5/098, C08K 3/22, C08K 5/09, C08K 3/06,
C08K 5/47, C08K 5/31;
C09D 107/00, C08L 91/00, C08K 3/04,
C08K 3/36, C08K 5/548, C08K 5/18, C08K 5/098,
C08K 3/22, C08K 5/09, C08K 3/06, C08K 5/47,
C08K 5/31;
C09D 107/00, C08L 91/00, C08L 61/14,
C08L 61/28, C08K 3/04, C08K 3/36, C08K 5/548,
C08K 5/18, C08K 5/098, C08K 3/22, C08K 5/09,
C08K 3/06, C08K 5/47, C08K 5/31**

**Description**

TECHNICAL FIELD

The present invention relates to a tire.

BACKGROUND OF THE INVENTION

A tire is required to be produced so as to be excellent in durability in order to suppress frequency of tire exchange and allow the tire to be used for a longer period of time. JP 2015-511998 A describes an elongated steel element for reinforcing a rubber product, wherein the elongated steel element is covered with a coverture of a ternary alloy of copper-M-zinc or a quaternary alloy. Moreover, JP 2015-511998 A also discloses a reinforced rubber article including a rubber compound and the elongated steel element.

SUMMARY OF THE INVENTION

Although JP 2015-511998 A describes that durability of a tire is improved, a specific degree of the durability of the tire is not clear when the rubber article is produced as the tire, and there is room for improvement.
It is an object of the present invention to improve durability of a tire.
The present invention relates to:

a tire comprising a steel cord and a topping rubber covering the steel cord,
wherein the steel cord is provided with a ternary plated layer consisting of copper, zinc, and cobalt,
wherein the topping rubber is composed of a rubber composition comprising a rubber component and silica, and
wherein, when a content of zinc in the ternary plated layer is defined as X (% by mass) and a content of silica based on 100 parts by mass of the rubber component is defined as Y (part by mass), Y/X is 0.50 or more.

According to the present invention, the durability of a tire can be improved.

BRIEF DESCRIPTION OF THE DRAWINGS

FIG. 1 is a cross-sectional view of a tire according to one embodiment of the present invention.
FIG. 2 is a view schematically showing a belt layer.
FIG. 3 is an explanatory view of one example of configuration of a single-twist steel cord.
FIG. 4 is an explanatory view of one example of configuration of a layer-twist steel cord.
FIG. 5 is a cross-sectional view on a surface perpendicular to a longitudinal direction of the layer-twist steel cord of FIG. 4.

DETAILED DESCRIPTION

The tire that is one embodiment of the present invention is a tire comprising a steel cord and a topping rubber covering the steel cord, wherein the steel cord is provided with a ternary plated layer consisting of copper, zinc, and cobalt, wherein the topping rubber is composed of a rubber composition comprising a rubber component and silica, and wherein, when a content of zinc in the ternary plated layer is defined as X (% by mass) and a content of silica based on 100 parts by mass of the rubber component is defined as Y (part by mass), Y/X is 0.50 or more.
In a tire comprising a steel cord provided with a ternary plated layer consisting of copper, zinc, and cobalt and a topping rubber covering the steel cord, when a content of zinc in the ternary plated layer has a predetermined relationship with a content of silica based on 100 parts by mass of the rubber component, durability of the tire can be improved. The reason for that is considered as follows, although the following consideration is not intended to be bound by any theory.
When silica is compounded in the topping rubber, fuel efficiency of the topping rubber is improved. Moreover, when the silica is compounded, a rubber becomes more acidic, and a ZnO coating film on a plated surface of the steel cord easily peels off, thereby forming an adhesion layer efficiently. Furthermore, when a ternary plating is adopted, cobalt having an ionization tendency stronger than that of copper is eluted preferentially, so that an increase of the volume of the adhesion layer due to elution of copper after hygrothermal aging is suppressed, and adhesion force can be kept high. With cooperation of the above-described matters, it is considered that a remarkable effect of allowing for improvement in durability of the tire more effectively is achieved.

A content of a guanidine-based vulcanization accelerator based on 100 parts by mass of the rubber component is preferably 0.1 parts by mass or less from the viewpoint of durability after hygrothermal aging.

The rubber composition according to the present embodiment preferably further comprises a thermosetting resin and a curing agent.

Due to a curing reaction of the thermosetting resin, a rising rate of rubber elasticity during apparent vulcanization becomes high, and it is considered that deterioration of the rubber can also be suppressed even if the guanidine-based vulcanization accelerator is not compounded.

The rubber composition according to the present embodiment preferably further comprises a cobalt compound from the viewpoint of durability after hygrothermal aging.

An average thickness of the ternary plated layer is preferably 0.10 μm or more and 0.40 μm or less from the viewpoint of adhesiveness.

When a cross-sectional area of the steel cord is defined as S (mm$^2$) and a number of the steel cord placed per width of 50 mm that extends in a direction perpendicular to a longitudinal direction of the steel cord is defined as E, a product (S × E) of S and E is preferably 5.0 or more and 40.0 or less. Moreover, S, E, and Y preferably satisfy the following inequality (1).

$$Y/(S \times E) \geq 0.35 \ \cdots \ (1)$$

When the value of the inequality (1) is within the above-described range, it is considered that an effect of suppressing an increase of the volume of the adhesion layer due to elution of copper can be expected.

<Measuring method>

The "average thickness of the plated layer" is measured according to JIS H 8501:1999.

The "cross-sectional area of the steel cord" is a cross-sectional area of the steel cord when the steel cord is cut along a plane perpendicular to the longitudinal direction of the steel cord.

A "nitrogen adsorption specific surface area (N$_2$SA) of carbon black" is measured according to JIS K 6217-2:2017. An "oil absorption amount (DBP oil absorption amount (OAN)) of carbon black" is measured according to JIS K 6217-4:2017.

A "nitrogen adsorption specific surface area (N$_2$SA) of silica" is measured by a BET method according to ASTM D3037-93.

A procedure for producing a tire that is one embodiment of the present invention will be described below in detail. However, the following descriptions are illustrative for explaining the present invention and are not intended to limit the technical scope of the present invention to this description range only. Besides, in the present specification, a numerical range identified with "to" means to include the numerical values of both ends.

<Tire>

Hereinafter, a tire according to one embodiment of the present invention will be described with reference to the drawings.

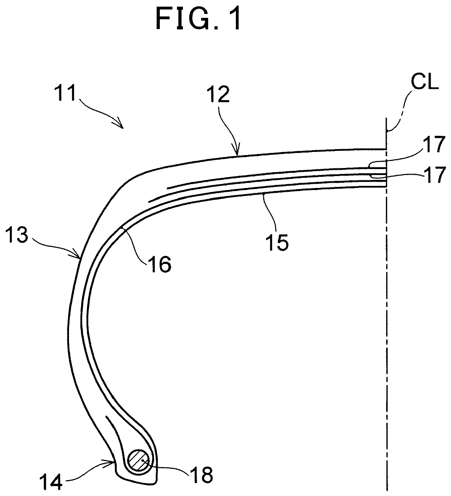

FIG. 1 shows a cross-sectional view of a tire 11 according to the present embodiment on a plane passing through a tire rotation axis. Although only parts on the left side from a center line (CL) are shown in FIG. 1, the tire has a similar continuous structure also on the right side from the CL when the CL is used as an axis of symmetry. As shown in FIG. 1, the tire 11 comprises a tread part 12, a sidewall part 13, a bead part 14, an inner liner 15, a carcass 16, belt layers 17, and a bead wire 18. Although there are two belt layers 17, the number of the layers is not particularly limited, and any number of the layers can be selected.

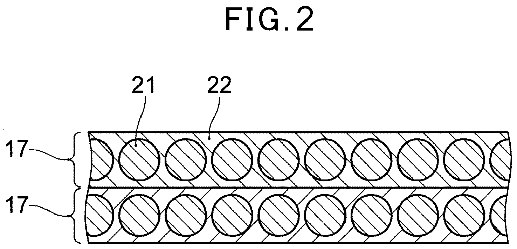

FIG. 2 shows a cross-sectional view along a longitudinal direction of the belt layers 17, that is, on a plane passing through the tire rotation axis of the tire 11. As shown in FIG. 2, the two belt layers 17 are overlapped in a radial direction of the tire 11. Each belt layer 17 comprises a plurality of steel cords 21 and a topping rubber 22. The plurality of steel cords 21 are parallelly arranged in rows. Moreover, the topping rubber 22 covers the steel cords 21, and the entire circumference of each steel cord is covered with the topping rubber 22. The steel cords 21 are embedded in the topping rubber 22. An inclination angle of each steel cord 21 relative to a tire circumferential direction is set in a range of, but not particularly limited to, for example, 0° to 60°, preferably 5° to 45°, more preferably 10° to 30°.

(Steel cord)

The steel cords according to the present embodiment each has one or more steel strands that are also referred to as filaments. In a case where one steel cord has a plurality of filaments, this steel cord preferably has a twist structure in which the plurality of filaments are intertwined along their longitudinal direction. The twist structure in the case where the steel cord has the plurality of filaments is not particularly limited and can be configured to be, for example, a single-twist steel cord of a $1 \times N$ structure or a layer-twist steel cord of a $N + M$ structure. Its detailed descriptions will be provided below.

The single-twist structure can be expressed as, for example, a $1 \times N$ structure. The $1 \times N$ structure means a structure in which N filaments are intertwined to form a single layer (one layer). The single layer means a structure in which the filaments are arranged on a cross-sectional plane perpendicular to the longitudinal direction of the steel cord such that the filaments form a single layer (one layer) along the circumferential direction of one circle. N is preferably 2 to 6.

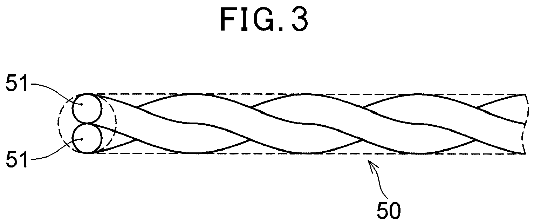

FIG. 3 is a perspective view of a steel cord having a $1 \times 2$ structure. In a steel cord 50 shown in FIG. 3, two filaments 51 are helically intertwined along the longitudinal direction such that they form a single layer.

The layer-twist structure is a structure in which a plurality of filaments is twisted together in layers in order from a center part on the cross-sectional plane perpendicular to the longitudinal direction of the steel cord to form multiple layers, and the layer-twist structure can be expressed as, for example, a $N + M$ structure. The $N + M$ structure means a structure having a core in which N filaments are intertwined to become helical along its longitudinal direction, and an outer sheath in which M filaments are helically intertwined along the longitudinal direction of the core to cover the periphery of the core.

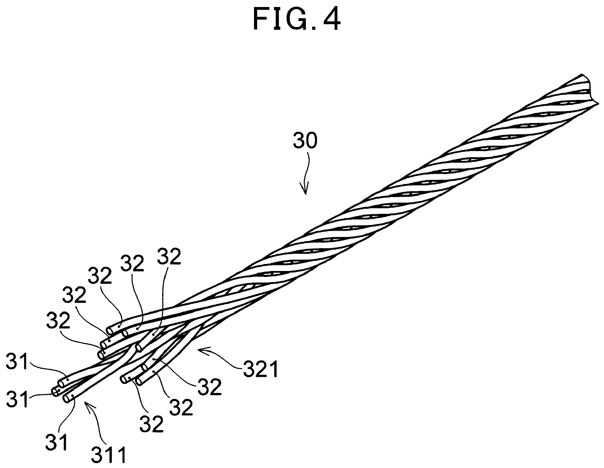

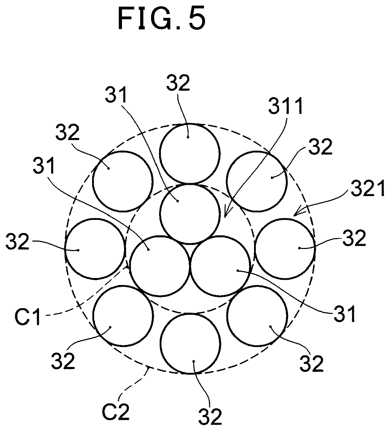

FIG. 4 is a perspective view of a steel cord having a 3 + 8 structure, and FIG. 5 schematically shows respective cross-sectional views on a plane perpendicular to the longitudinal direction of FIG. 4. The steel cord 30 shown in FIGS. 4 and 5 forms a core 311 in which three filaments 31 are intertwined to become a first layer. Moreover, an outer sheath 321 of one layer is formed around the core 311 along the longitudinal direction of the core 311 by helically intertwining eight filaments 32. Besides, "one layer" here means a structure in which filaments are arranged on a cross-sectional plane perpendicular to the longitudinal direction of the steel cord to form a single layer (one layer) along the circumferential direction of one circle. Specifically, as shown in FIG. 5, filaments 32 constituting the outer sheath 321 are arranged so as to form one layer between a circumscribed circle C1 of the core 311 and a circumscribed circle C2 of the outer sheath 321.

The layer-twist structure is not limited to the above-described aspect, and can also be configured, for example, as a three layer-twist structure in which a plurality of filaments are further helically intertwined along the longitudinal direction of the core 311 on the periphery of the outer sheath 321 of the steel cord 30 shown in FIGS. 4 and 5, etc. Moreover, the number of filaments constituting the core 311 or the outer sheath 321 is also not particularly limited and can be optionally selected depending on filament diameter (diameter of filament), etc.

Although the filament diameter of the steel cord is not particularly limited and can be optionally selected depending on required properties, etc., it is preferably 0.10 mm or more, more preferably 0.13 mm or more, further preferably 0.16 mm or more, further preferably 0.19 mm or more, further preferably 0.22 mm or more, further preferably 0.25 mm or more, particularly preferably 0.28 mm or more, from the viewpoint of securing durability of the steel cord against shock. Moreover, it is preferably 0.70 mm or less, more preferably 0.60 mm or less, further preferably 0.50 mm or less, further preferably 0.45 mm or less, further preferably 0.40 mm or less, particularly preferably 0.35 mm or less, from the viewpoint of sufficiently absorbing shock to improve ride comfort.

The steel cord according to the present embodiment is provided with a ternary plated layer consisting of copper (Cu), zinc (Zn), and cobalt (Co). The steel cord comprising such a ternary plated layer exerts high wet-heat resistant adhesion even under a sever condition of high temperature and high humidity and thus can prevent the topping rubber and the steel cord from peeling off therebetween, and the durability of the tire under a hygrothermal condition can be improved. Besides, in a case where the steel cord has a plurality of filaments, a surface of each filament can be provided with a ternary plated layer.

A content X (% by mass) of zinc in the ternary plated layer is preferably 15% by mass or more, more preferably 20% by mass or more, further preferably 25% by mass or more, from the viewpoint of suppression of overreaction of copper. Moreover, X is preferably 44% by mass or less, more preferably 40% by mass or less, further preferably 36% by mass or less, particularly preferably 32% by mass or less, from the viewpoint of suppression of deterioration of adhesion due to excessive generation of zinc oxide.

A ratio Y/X of a content Y (part by mass) of silica based on 100 parts by mass of the rubber component to the content X (% by mass) of zinc in the ternary plated layer is 0.50 or more, preferably 0.53 or more, more preferably 0.60 or more, further preferably 0.65 or more, particularly preferably 0.70 or more, from the viewpoint of removal of a coating film of zinc oxide. Moreover, Y/X is preferably 1.80 or less, more preferably 1.40 or less, further preferably 1.30 or less, further preferably 1.20 or less, further preferably 1.10 or less, particularly preferably 1.00 or less, from the viewpoint of prevention of an increase of a volume of an adhesion layer due to excessive elution of copper.

A content of copper in the ternary plated layer is preferably 55% by mass or more, more preferably 58% by mass or more, further preferably 61% by mass or more, from the viewpoint of adhesiveness. Moreover, it is preferably 78% by mass or less, more preferably 75% by mass or less, further preferably 72% by mass or less, from the viewpoint of preventing rubber deterioration due to elution of copper under the hygrothermal condition.

A content of cobalt in the ternary plated layer is preferably 1.0% by mass or more, more preferably 2.0% by mass or more, further preferably 3.0% by mass or more, from the viewpoint of wet-heat adhesion. Moreover, it is preferably 8.0% by mass or less, more preferably 7.0% by mass or less, further preferably 6.0% by mass or less, from the viewpoint of preventing occurrence of crack during wire drawing.

The ternary plated layer according to the present embodiment can be formed by forming a copper layer, a zinc layer, and a cobalt layer on each filament by means of plating before wire drawing, followed by performing heat treatment to diffuse metal of each layer formed on the surface of the filament. Besides, a stacking order of the layers formed on the filament for forming the ternary plated layer is not particularly limited, and for example, the copper layer and the zinc layer may be stacked in this order from the filament side. Moreover, it is preferable that the cobalt layer is formed between the copper layer and the zinc layer or on the zinc layer. It is preferable that the ternary plated layer is formed in the stacking order of the copper layer, the cobalt layer, and the zinc layer from the filament side. Each of contents of copper, zinc, and cobalt in the ternary plated layer can be adjusted, for example, by adjusting a thickness of each plated layer.

Although a condition for the heat treatment is not particularly limited, the heat treatment can be implemented, for example, by heating under air atmosphere at 500°C or higher and 650°C or lower for 5 to 25 seconds. With such heat treatment, copper, cobalt, and zinc are uniformly diffused throughout the entire plated layer.

Next, wire drawing is performed on a material subjected to the heat treatment such that a filament has a desired filament diameter, so that a filament having a plated layer can be formed. In a case where a steel cord is composed of one filament, after wire drawing, the steel cord can be used as it is. Moreover, in a case where a steel cord has a plurality of filaments, after wire drawing, the steel cord can be configured to have a plated layer by intertwining obtained filaments such that, for example, the steel cord has a desired twist structure.

An average thickness of the ternary plated layer is preferably 0.10 $\mu$m or more, more preferably 0.13 $\mu$m or more, further preferably 0.16 $\mu$m or more, from the viewpoint of initial adhesion. Moreover, it is preferably 0.40 $\mu$m or less, more preferably 0.35 $\mu$m or less, further preferably 0.30 $\mu$m or less, from the viewpoint of suppressing excessive adhesion reaction.

A cross-sectional area S of the steel cord is preferably 0.05 mm$^2$ or more, more preferably 0.07 mm$^2$ or more, further preferably 0.09 mm$^2$ or more, particularly preferably 0.11 mm$^2$ or more. Moreover, the cross-sectional area S of the steel cord is preferably 0.80 mm$^2$ or less, preferably 0.60 mm$^2$ or less, further preferably 0.40 mm$^2$ or less, further preferably 0.30 mm$^2$ or less, further preferably 0.25 mm$^2$ or less, particularly preferably 0.20 mm$^2$ or less.

A number E of steel cords placed per width of 50 mm that extends in a direction perpendicular to a longitudinal direction of the steel cords is, but not particularly limited to, preferably 20 or more, more preferably 30 or more, further preferably 35 or more, particularly preferably 40 or more. Moreover, E is preferably 80 or less, more preferably 70 or less, further preferably 60 or less, further preferably 55 or less, particularly preferably 50 or less.

A product (S $\times$ E) of S and E is preferably 2.0 or more, preferably 3.0 or more, further preferably 4.0 or more, further preferably 5.0 or more, particularly preferably 6.0 or more. Moreover, the product of S and E is preferably 40.0 or less, more preferably 30.0 or less, further preferably 20.0 or less, further preferably 15.0 or less, further preferably 12.0 or less, particularly preferably 10.0 or less. Besides, the product of S and E is an index representing an amount of steel cord per unit cross-sectional area.

A ratio (Y/(S $\times$ E)) of Y to the product (S $\times$ E) of S and E, which is expressed in the above-described inequality (1), is preferably 0.35 or more, more preferably 0.46 or more, further preferably 0.65 or more, further preferably 0.85 or more, further preferably 1.0 or more, further preferably 1.1 or more, further preferably 1.2 or more, particularly preferably 1.4 or more. Moreover, Y/(S $\times$ E) is preferably 8.9 or less, more preferably 6.7 or less, further preferably 6.0 or less, particularly preferably 5.3 or less. When the value in the inequality (1) is within the above-described ranges, an advantage of formation of an adhesion layer due to acidification surpasses an increase of the volume of the adhesion layer due to precipitation of copper, and it is considered that good adhesion performance can be obtained.

[Rubber composition]

A rubber composition constituting the topping rubber 22 covering the steel cord (which is referred to as a "rubber composition according to the present embodiment" hereinafter) will be described below in detail.

<Rubber component>

In the rubber composition according to the present embodiment, a diene-based rubber is appropriately used as a rubber component. A content of the diene-based rubber in the rubber component is preferably 80% by mass or more, more preferably 85% by mass or more, further preferably 90% by mass or more, particularly preferably 95% by mass or more, from the viewpoint of effects of the present invention. Moreover, the rubber component may be prepared as a rubber component consisting of a diene-based rubber.

Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. Among them, from the viewpoints of cord adhesiveness and elongation at break, it is preferable that an isoprene-based rubber is compounded in the rubber component, and the rubber component may be prepared as a rubber component consisting of an isoprene-based rubber.

(Isoprene-based rubber)

Examples of the isoprene-based rubber include a natural rubber (NR), an isoprene rubber (IR), a reformed NR, a modified NR, a modified IR, and the like. As the NR, for example, those common in the tire industry can be used, such as SIR20, RSS#3, and TSR20. The IR is not particularly limited, and those common in the tire industry can be used, such as, for example, IR2200. Examples of the reformed NR can include a deproteinized natural rubber (DPNR), an ultra pure natural rubber, and the like, examples of the modified NR can include an epoxidized natural rubber (ENR), a hydrogenated natural rubber (HNR), a grafted natural rubber, and the like, and examples of the modified IR can include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber when compounded in the rubber component is preferably 60% by mass or more, more preferably 70% by mass or more, further preferably 80% by mass or more, particularly preferably 90% by mass or more, from the viewpoint of the effects of the present invention. Moreover, an upper limit value of the content is not particularly limited and may be set to 100% by mass.

(SBR)

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used.

A content of the SBR when compounded in the rubber component is preferably 40% by mass or less, more preferably 20% by mass or less, further preferably 10% by mass or less, particularly preferably 5% by mass or less, from the viewpoint of the effects of the present invention.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

A content of the BR when compounded in the rubber component is preferably 40% by mass or less, more preferably 20% by mass or less, further preferably 10% by mass or less, particularly preferably 5% by mass or less, from the viewpoint of the effects of the present invention.

(Other rubber components)

The rubber component may also comprise other rubber components other than the diene-based rubbers to an extent so as not to affect the effects of the present invention. As the other rubber components, a cross-linkable rubber component commonly used in the tire industry can be used, examples of which include, for example, a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber, and the like. These other rubber components may be used alone, or two or more thereof may be used in combination. Moreover, the rubber component may or may not comprise a known thermoplastic elastomer in addition to the above-described rubber components.

<Filler>

The rubber composition according to the present embodiment comprises silica as a filler and preferably further comprises carbon black. Moreover, the filler may be prepared as a filler only consisting of silica and carbon black.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable for the reason that it has many silanol groups. Besides, in addition to the above-described silica, silica made from a biomass material such as rice husks may be appropriately used. These silica may be used alone, or two or more thereof may be used in combination.

A nitrogen adsorption specific surface area ($N_2SA$) of silica is preferably 100 $m^2$/g or more, more preferably 120 $m^2$/g or more, further preferably 140 $m^2$/g or more, particularly preferably 160 $m^2$/g or more, from the viewpoints of abrasion resistance and elongation at break. Moreover, it is preferably 350 $m^2$/g or less, more preferably 300 $m^2$/g or less, further preferably 250 $m^2$/g or less, from the viewpoints of heat generation and processability. Besides, the $N_2SA$ of silica is measured by the above-described measuring method.

A content Y (part by mass) of silica based on 100 parts by mass of the rubber component is preferably 7.5 parts by mass or more, more preferably 10 parts by mass or more, further preferably 12 parts by mass or more, further preferably 14 parts by mass or more, further preferably 16 parts by mass or more, particularly preferably 18 parts by mass or more, from the viewpoints of fuel efficiency and adhesiveness. Moreover, Y is preferably 50 parts by mass or less, more preferably 45 parts by mass or less, further preferably 40 parts by mass or less, particularly preferably 35 parts by mass or less, from the viewpoint of tire strength.

(Carbon black)

Carbon black is not particularly limited, and those common in the tire industry can be used, such as, for example, GPF, FEF, HAF, ISAF, and SAF. Besides, in addition to carbon black generated by burning general mineral oil, carbon black, for which a biomass material such as lignin is used, may be used. These carbon black may be used alone, or two or more thereof may be used in combination.

A nitrogen adsorption specific surface area ($N_2SA$) of carbon black is preferably 20 $m^2$/g or more, more preferably 30 $m^2$/g or more, further preferably 40 $m^2$/g or more, particularly preferably 50 $m^2$/g or more, from the viewpoint of reinforcing property. Moreover, the $N_2SA$ of carbon black is preferably 120 $m^2$/g or less, more preferably 100 $m^2$/g or less, further preferably 90 $m^2$/g or less, from the viewpoint of fuel efficiency. Besides, the $N_2SA$ of carbon black is measured by the above-described measuring method.

A content of carbon black when compounded based on 100 parts by mass of the rubber component is preferably 10 parts by mass or more, more preferably 20 parts by mass or more, further preferably 30 parts by mass or more, particularly preferably 40 parts by mass or more, from the viewpoint of elongation at break. Moreover, it is preferably 70 parts by mass or less, more preferably 65 parts by mass or less, further preferably 60 parts by mass or less, particularly preferably 55 parts by mass or less, from the viewpoints of elongation at break and fuel efficiency.

(Other fillers)

As fillers other than silica and carbon black, those conventionally and commonly used in the tire industry can be compounded, such as aluminum hydroxide, calcium carbonate, alumina, clay, and talc. In addition to these other fillers, biochar may be appropriately used.

A total content of fillers based on 100 parts by mass of the rubber component is preferably 40 parts by mass or more, more preferably 50 parts by mass or more, further preferably 60 parts by mass or more, particularly preferably 65 parts by mass or more, from the viewpoint of the effects of the present invention. Moreover, it is preferably 100 parts by mass or less, more preferably 90 parts by mass or less, further preferably 80 parts by mass or less, from the viewpoint of fuel efficiency.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitrobased silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, a sulfide-based silane coupling agent and/or a mercapto-based silane coupling agent are preferably compounded. As the silane coupling agent, those commercially available from, for example, Momentive Performance Materials, etc. can be used. These silane coupling agents may be used alone, or two or more thereof may be used in combination.

A content of the silane coupling agent when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

<Thermosetting resin>

It is preferable that the rubber composition according to the present embodiment comprises a thermosetting resin. The thermosetting resin here means a resin for which polymerization is performed by heating to cause polymers to form a network structure, so that the resin hardens and does not return to its original state.

The thermosetting resin is not particularly limited, examples of which include, for example, a resorcinol resin, a modified resorcinol resin, a cresol resin, a modified cresol resin, a phenol resin, a modified phenol resin, and the like. These thermosetting resins may be used alone, or two or more thereof may be used in combination. When these thermosetting resins are compounded, adhesiveness to the cord, elongation at break, and a complex elastic modulus can be improved. Among them, the resorcinol resin, the modified resorcinol resin, and the modified cresol resin are preferable, and the modified resorcinol resin is more preferable.

Examples of the resorcinol resin include, for example, a resorcinolformaldehyde condensate. Examples of the modified resorcinol resin include, for example, those in which a part of a repeating unit of a resorcinol resin is alkylated.

Examples of the cresol resin include, for example, a cresolformaldehyde condensate. Examples of the modified cresol resin include, for example, those in which a methyl group at the terminal of the cresol resin is modified to a hydroxyl group and those in which a part of a repeating unit of the cresol resin is alkylated.

Examples of the phenol resin include those obtained by reacting phenol with aldehydes such as formaldehyde, acetaldehyde, and furfural using an acid catalyst or an alkali catalyst. Among them, those obtained by reaction using the acid catalyst (a novolac-type phenolic resin, etc.) is preferable. Moreover, examples of the modified phenol resin include a resin obtained by modifying a phenol resin using cashew oil, tall oil, linseed oil, animal and vegetable oils, unsaturated fatty acid, rosin, alkylbenzene resin, aniline, melamine, etc.

A content of the thermosetting resin when compounded based on 100 parts by mass of the rubber component is preferably 1.0 part by mass or more, preferably 1.3 parts by mass or more, further preferably 1.6 parts by mass or more, from the viewpoints of adhesiveness and durability after hygrothermal aging. Moreover, it is preferably 5.0 parts by mass or less, more preferably 4.0 parts by mass or less, further preferably 3.5 parts by mass or less, particularly preferably 3.0 parts by mass or less, from the viewpoints of suppressing adhesion reaction during vulcanization and preventing deterioration of durability after hygrothermal aging.

<Curing agent>

It is preferable that the rubber composition according to the present embodiment comprises a curing agent in order to harden the above-described thermosetting resin. The curing agent is not particularly limited, examples of which include, for example, hexamethoxymethylmelamine (HMMM), a modified etherified methylolmelamine resin, hexamethylenetetramine (HMT), pentakis(methoxymethyl)methylolmelamine, tetrakis(methoxymethyl)dimethylolmelamine, and the like. The modified etherified methylolmelamine resin is preferable. These curing agents may be used alone, or two or more thereof may be used in combination.

A content of the curing agent when compounded based on 100 parts by mass of the rubber component is preferably 0.1 parts by mass or more, more preferably 0.3 part by mass or more, further preferably 0.5 parts by mass or more, particularly preferably 0.9 parts by mass or more, from the viewpoint of the effects of the present invention. Moreover, the content is preferably 3.0 parts by mass or less, more preferably 2.5 parts by mass or less, further preferably 2.0 parts by mass or less.

<Cobalt compound>

It is preferable that the rubber composition according to the present embodiment comprises a cobalt compound. When the rubber composition comprises the cobalt compound, adhesion force between the steel cord and the topping rubber can be enhanced, and a tire having a good durability can be produced. Examples of the cobalt compound include, for example, cobalt alone, cobalt chloride, organic acid cobalt, inorganic acid cobalt, and the like, and the organic acid cobalt is preferable. These cobalt compounds may be used alone, or two or more thereof may be used in combination.

The organic acid cobalt is appropriately used to promote adhesion between the plated layer of the steel cord and the rubber composition and prevent components of plating from flowing out into the rubber composition at the time of hygrothermal aging. The number of carbon atoms of organic acids constituting the organic acid cobalt is preferably 12 or more and 24 or less, more preferably 14 or more and 22 or less. Specific examples of the organic acid cobalt salt include, for example, cobalt stearate, cobalt naphthenate, cobalt neodecanoate, cobalt rosin acid, cobalt versatic acid, cobalt tall oil acid, cobalt oleic acid, cobalt linoleic acid, cobalt linolenic acid, cobalt palmitic acid, and the like. Moreover, the organic acid cobalt may be complex salt (for example, cobalt boron-3 neodecanoate in which a part of organic acids is substituted with boric acid.

Examples of the inorganic acid cobalt include, for example, cobalt sulfate, cobalt nitrate, cobalt phosphate, cobalt chromate, and the like.

A content of the cobalt compound when compounded based on 100 parts by mass of the rubber component is preferably 0.1 parts by mass or more, more preferably 0.2 parts by mass or more, further preferably 0.3 parts by mass or more, from the viewpoint of adhesiveness. Moreover, the content is preferably 3.0 parts by mass or less, more preferably 2.0 parts by mass or less, further preferably 1.0 part by mass or less.

<Other compounding agents>

The rubber composition according to the present embodiment can appropriately comprise compounding agents conventionally and commonly used in the tire industry, such as, for example, a softening agent, organic acid zinc, wax, an antioxidant, stearic acid, zinc oxide, a vulcanizing agent, and a vulcanization accelerator, in addition to the above-described components.

Examples of the softening agent include, for example, a resin component, oil, a liquid rubber, and the like.

Examples of the resin component include, but not particularly limited to, a petroleum resin, a terpene-based resin, a rosin-based resin, a phenol-based resin, and the like which are commonly used in the tire industry. These resin components may be used alone, or two or more thereof may be used in combination.

Examples of oil include, for example, process oils, vegetable oils and fats, animal oils and fats, and the like. Examples of the process oils include paraffinic process oils, naphthenic process oils, aromatic process oils, and the like. Moreover, a process oil having a low content of a polycyclic aromatic compound (PCA) can also be used for environmental measures. Examples of the process oil having a low PCA content include mild extracted solvate (MES), treated distillate aromatic extract (TDAE), a heavy naphthenic oil, and the like. Moreover, from the viewpoint of a life cycle assessment, one obtained by refining a waste oil after use for a rubber mixing machine or an engine or waste cooking oil used in a cooking facility may be used.

A content of oil when compounded based on 100 parts by mass of the rubber component is preferably 1 part by mass or more, more preferably 2 parts by mass or more, further preferably 3 parts by mass or more, from the viewpoint of the effects of the present invention. Moreover, the content is preferably less than 30 parts by mass, more preferably less than 20 parts by mass, further preferably less than 10 parts by mass.

The liquid rubber is not particularly limited as long as it is a polymer in a liquid state at a normal temperature (25°C), examples of which include, for example, a liquid butadiene rubber (liquid BR), a liquid styrene-butadiene rubber (liquid SBR), a liquid isoprene rubber (liquid IR), and the like. These liquid rubbers may be used alone, or two or more thereof may be used in combination.

A content of the softening agent based on 100 parts by mass of the rubber component (a total amount of all of a plurality of softening agents when used in combination) is preferably 1 part by mass or more, more preferably 2 parts by mass or more, further preferably 3 parts by mass or more, from the viewpoint of the effects of the present invention. Moreover, the content is preferably 150 parts by mass or less, more preferably 100 parts by mass or less, further preferably 50 parts by mass or less, further preferably 30 parts by mass or less, particularly preferably 15 parts by mass or less.

The number of carbon atoms of organic acids constituting organic acid zinc is preferably 10 or more and 24 or less, more preferably 12 or more and 22 or less. Specific examples of organic acid zinc include, for example, zinc laurate, zinc oleate, zinc stearate, zinc benzoate, zinc t-butylbenzoate, and the like. These organic acid zinc may be used alone, or two or more thereof may be used in combination.

A content of organic acid zinc when compounded based on 100 parts by mass of the rubber component is preferably 0.5 parts by mass or less, more preferably 0.3 parts by mass or less, further preferably 0.1 parts by mass or less.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, further preferably 3.0 parts by mass or more, particularly preferably 4.0 parts by mass or more, from the viewpoint of the effects of the present invention. Moreover, it is preferably 15 parts by mass or less, more preferably 12 parts by mass or less, further preferably 10 parts by mass or less, from the viewpoint of abrasion resistance.

Sulfur is appropriately used as a vulcanizing agent. As sulfur, a powdered sulfur, an oil processing sulfur, a precipitated sulfur, a colloidal sulfur, an insoluble sulfur, a highly dispersible sulfur, and the like can be used. Moreover, as the vulcanizing agent other than sulfur, a known organic cross-linking agent can also be used.

A content of sulfur when compounded based on 100 parts by mass of the rubber component is preferably 0.1 parts by mass or more, more preferably 0.3 parts by mass or more, further preferably 0.5 part by mass or more, further preferably 1.0 part by mass or more, further preferably 2.0 parts by mass or more, particularly preferably 3.0 parts by mass or more, from the viewpoint of securing a sufficient vulcanization reaction. Moreover, it is preferably 10.0 parts by mass or less, more preferably 9.0 parts by mass or less, further preferably 8.0 parts by mass or less, particularly preferably 7.0 parts by mass or less, from the viewpoint of prevention of deterioration. Besides, a content of the vulcanizing agent in a case where an oil-containing sulfur is used as the cross-linking agent shall be a total content of pure sulfur contained in the oil-containing sulfur.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, one or more vulcanization accelerators selected from a group consisting of the sulfenamide-based vulcanization accelerator and the thiazole-based vulcanization accelerator are preferable, and the sulfenamide-based accelerator is more preferable, from the viewpoint that desired effects can be obtained more appropriately.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable, and the MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, DPG is preferable. However, a content of the guanidine-based vulcanization accelerator when compounded based on 100 parts by mass of the rubber component is preferably 0.5 parts by mass or less, more preferably 0.3 parts by mass or less, further preferably 0.1 parts by mass or less, from the viewpoint of the effects of the present invention, and it is particularly preferable that the rubber composition does not comprise a guanidine-based vulcanization accelerator.

A content of the vulcanization accelerator when compounded based on 100 parts by mass of the rubber component is preferably 0.3 parts by mass or more, preferably 0.5 parts by mass or more, further preferably 0.7 parts by mass or more, from the viewpoint of securing a sufficient vulcanization rate. Moreover, the content of the vulcanization accelerator is preferably 10 parts by mass or less, more preferably 5.0 parts by mass or less, further preferably 3.0 parts by mass or less, from the viewpoint of suppressing blooming.

The rubber composition according to the present embodiment can be produced by a known method. For example, it can be produced by kneading the respective above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

The tire according to the present embodiment comprising the steel cord topping rubber composed of the rubber composition can be produced by a usual method. That is, the tire can be produced by preparing a topping sheet by covering a steel cord with an unvulcanized rubber composition obtained by compounding the above-described components for a rubber component as appropriate, attaching it together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

<Application>

The tire according to the present embodiment can be used both as a general-purpose tire such as a tire for a passenger car, a tire for a truck/bus, and a motorcycle tire, and as a racing tire. Besides, the tire for a passenger car refers to a tire that is presupposed to be mounted to a vehicle running with four wheels and that has a maximum load capacity of 1000 kg or less. Moreover, the tire according to the present embodiment can be used as an allseason tire, a summer tire, or a winter tire such as a studless tire.

EXAMPLES

Hereinafter, examples considered to be preferable in implementing the present invention (Examples) will be described, though the scope of the present invention is not limited to these Examples only. Tires are examined which comprise steel cords covered with topping rubbers obtained using various chemicals described below in accordance with compounding formulations of Table 1, and results calculated based on evaluation methods described below are shown in Table 1.

Various chemicals used in Examples and Comparative examples are collectively shown below.

NR: TSR 20
Carbon black: SHOW BLACK N330 manufactured by Cabot Japan K.K., ($N_2SA$: 75 $m^2/g$)
Silica: Ultrasil VN3 manufactured by Evonik Degussa GmbH ($N_2SA$: 175 $m^2/g$)
Silane coupling agent: Si69 manufactured by Evonik Degussa GmbH (bis(3-triethoxysilylpropyl)tetrasulfide)
Thermosetting resin: SUMIKANOLE 620 manufactured by Taoka Chemical Co., Ltd. (modified resorcinol resin)
Curing agent: SUMIKANOLE 507AP manufactured by Taoka Chemical Co., Ltd. (modified etherified methylolmelamine resin)
Oil: VivaTec 500 manufactured by H&R Group (TDAE oil)
Antioxidant: Antigen 6C manufactured by Sumitomo Chemical Co., Ltd. (N-(1,3-dimethylbutyl)-N'-phenyl-p-phenylenediamine)
Cobalt compound: Cost-F manufactured by DIC Corporation (cobalt stearate)
Zinc oxide: Zinc oxide No. 2 manufactured by Mitsui Mining & Smelting Co., Ltd.
Stearic acid: Bead stearic acid "CAMELLIA" manufactured by NOF CORPORATION
Sulfur: M95 manufactured by NIPPON KANRYU INDUSTRY CO., LTD. (insoluble sulfur)
Vulcanization accelerator 1: Nocceler DZ manufactured by Ouchi Shinko Chemical Industry Co., Ltd. (N, N-dicyclohexyl-2-benzothiazolylsulfenamide)
Vulcanization accelerator 2: Perkacit DPG manufactured by Flexsys (1,3-diphenylguanidine)

(Examples and Comparative examples)

According to the compounding formulations shown in Table 1, using a 1.7 L closed Banbury mixer, chemicals other than sulfur and a vulcanization accelerator are kneaded for 5 minutes until the temperature reaches a discharge temperature of 160°C, to obtain a kneaded product. Next, using a twin-screw open roll, sulfur and the vulcanization accelerator are added to the obtained kneaded product, and the mixture is kneaded for 4 minutes until the temperature reaches 105°C, to obtain an unvulcanized rubber composition. A steel cord (configuration: $1 \times 2 \times 0.295$) is covered with the obtained unvulcanized rubber composition, thereby obtaining a steel cord-rubber complex. Using this complex, each test tire (size: 195/65R15) is produced, and the following evaluations are carried out. Besides, a steel cord of binary plating is configured to have composition of its plated layer with 63% by mass of Cu and 37% by mass of Zn, and a steel cord of ternary plating is configured to have composition of its plated layer with 68% by mass of Cu, 28% by mass of Zn, and 4% by mass of Co.

<Fuel efficiency>

Each rubber test piece subjected to vulcanization is prepared by cutting out the rubber test piece having a length of 20 mm, a width of 4 mm, and a thickness of 1 mm from a topping rubber of each test tire such that a tire circumferential direction becomes a long side and a tire radial direction becomes a thickness direction. For each rubber test piece, a loss tangent (tan $\delta$) is measured using EPLEXOR series manufactured by gabo Systemtechnik GmbH under a condition of a temperature at 70°C, an initial strain of 10%, a dynamic strain of $\pm 2\%$, and a frequency of 10 Hz, and an inverse value of a value of the obtained tan $\delta$ is indicated as an index with a value of Comparative example 7 being as 100. The results show that the larger the index is, the better the fuel efficiency is.

<Peeling test>

A belt layer comprising a tire equatorial part is cut out as a sample piece having a width of 25 mm that extends in a tire axial direction. When the obtained sample piece is peeled off from its one end-side along an area between belt ply parts at a rate of 50 mm/min using a peeling tester, peeling-off resistive force regarding initial adhesion and peeling-off resistive force after hygrothermal aging are measured. A sample piece cut out of a tire that is naturally cooled at a normal temperature and a normal humidity (20°C, 50%RH) after vulcanizing the tire is used for measurement of the peeling-off resistive force regarding initial adhesion. A sample piece, obtained by further leaving the above-described cut-out sample piece to stand at a temperature of 80°C and a relative humidity of 90% in an oven for one week to make the cut-out sample piece undergo hygrothermal aging, is used for measurement of the peeling-off resistive force after hygrothermal aging. Results obtained by the above-described test are indicated as indexes with respective values of peeling-off resistive force of Comparative example 7 being as 100. Besides, in Table 1, the peeling-off resistive force regarding initial adhesion is indicated as "initial adhesion performance", and the peeling-off resistive force after hygrothermal aging is indicated as "durability after hygrothermal aging".

Table 1

| | Comparative example | | | | | | |
|---|---|---|---|---|---|---|---|
| | 1 | 2 | 3 | 4 | 5 | 6 | 7 |
| Compounding amount (part by mass) | | | | | | | |
| NR | 100 | 100 | 100 | 100 | 100 | 100 | 100 |
| Carbon black | 50 | 50 | 50 | 50 | 50 | 55 | 50 |
| Silica | - | 20 | 10 | - | 5 | 5 | 10 |
| Silane coupling agent | - | 1.2 | 0.6 | - | 0.3 | 0.3 | 0.6 |
| Thermosetting resin | - | - | - | - | - | - | - |
| Curing agent | - | - | - | - | - | - | - |
| Oil | 5.0 | 5.0 | 5.0 | 5.0 | 5.0 | 5.0 | 5.0 |
| Antioxidant | 2.0 | 2.0 | 2.0 | 2.0 | 2.0 | 2.0 | 2.0 |
| Cobalt compound | 0.5 | 0.5 | 0.5 | 0.5 | 0.5 | 0.5 | 0.5 |
| Zinc oxide | 10 | 10 | 10 | 10 | 10 | 10 | 10 |
| Stearic acid | 1.0 | 1.0 | 1.0 | 1.0 | 1.0 | 1.0 | 1.0 |
| Sulfur | 7.0 | 7.0 | 7.0 | 7.0 | 7.0 | 7.0 | 7.0 |
| Vulcanization accelerator 1 | 1.0 | 1.0 | 1.0 | 1.0 | 1.0 | 1.0 | 1.0 |
| Vulcanization accelerator 2 | - | 1.0 | 1.0 | - | - | - | - |
| Plated layer | binary | binary | binary | ternary | ternary | ternary | ternary |
| Average thickness of plated layer ($\mu$m) | 0.24 | 0.24 | 0.24 | 0.19 | 0.19 | 0.19 | 0.19 |
| Amount X of Zn in plated layer (% by mass) | 37 | 37 | 37 | 28 | 28 | 28 | 28 |
| Y/X | 0 | 0.54 | 0.27 | 0 | 0.18 | 0.18 | 0.36 |
| Filament diameter (mm) | 0.295 | 0.295 | 0.295 | 0.295 | 0.295 | 0.295 | 0.295 |
| S ($mm^2$) | 0.14 | 0.14 | 0.14 | 0.14 | 0.14 | 0.14 | 0.14 |
| E (number) | 46 | 46 | 46 | 46 | 46 | 46 | 46 |
| S × E | 6.3 | 6.3 | 6.3 | 6.3 | 6.3 | 6.3 | 6.3 |
| Y/(S × E) | 0 | 3.2 | 1.6 | 0 | 0.80 | 0.80 | 1.6 |
| Index | | | | | | | |
| Fuel efficiency | 94 | 103 | 99 | 95 | 96 | 87 | 100 |
| Initial adhesion performance | 89 | 108 | 98 | 89 | 94 | 94 | 100 |
| Durability after hygrothermal aging | 80 | 97 | 88 | 89 | 93 | 95 | 100 |

- continued -

| | Example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 100 | 100 | 100 | 100 | 100 | 100 | 100 | 100 |
| Carbon black | 50 | 50 | 50 | 50 | 50 | 40 | 50 | 50 |
| Silica | 20 | 20 | 20 | 20 | 30 | 20 | 15 | 15 |
| Silane coupling agent | 1.2 | 1.2 | 1.2 | 1.2 | 1.8 | 1.2 | 0.9 | 0.9 |
| Thermosetting resin | - | 2.0 | - | 2.0 | 2.0 | - | 2.0 | 2.0 |
| Curing agent | - | 1.0 | - | 1.0 | 1.0 | - | 1.0 | 1.0 |
| Oil | 5.0 | 5.0 | 5.0 | 5.0 | 5.0 | 5.0 | 5.0 | 5.0 |
| Antioxidant | 2.0 | 2.0 | 2.0 | 2.0 | 2.0 | 2.0 | 2.0 | 2.0 |
| Cobalt compound | 0.5 | 0.5 | 0.5 | 0.5 | 0.5 | 0.5 | 0.5 | 0.5 |
| Zinc oxide | 10 | 10 | 10 | 10 | 10 | 10 | 10 | 10 |
| Stearic acid | 1.0 | 1.0 | 1.0 | 1.0 | 1.0 | 1.0 | 1.0 | 1.0 |
| Sulfur | 7.0 | 7.0 | 7.0 | 7.0 | 7.0 | 7.0 | 7.0 | 7.0 |
| Vulcanization accelerator 1 | 1.0 | 1.0 | 1.0 | 1.0 | 1.0 | 1.0 | 1.0 | 1.0 |
| Vulcanization accelerator 2 | 1.0 | 1.0 | 0.1 | - | - | 1.0 | - | - |
| Plated layer | ternary | ternary | ternary | ternary | ternary | ternary | ternary | ternary |
| Average thickness of plated layer (μm) | 0.19 | 0.19 | 0.19 | 0.19 | 0.19 | 0.19 | 0.19 | 0.19 |
| Amount X of Zn in plated layer (% by mass) | 28 | 28 | 28 | 28 | 28 | 28 | 28 | 28 |
| Y/X | 0.71 | 0.71 | 0.71 | 0.71 | 1.07 | 0.71 | 0.54 | 0.54 |
| Filament diameter (mm) | 0.295 | 0.295 | 0.295 | 0.295 | 0.295 | 0.295 | 0.295 | 0.295 |
| $S$ (mm$^2$) | 0.14 | 0.14 | 0.14 | 0.14 | 0.14 | 0.14 | 0.14 | 0.14 |
| $E$ (number) | 46 | 46 | 46 | 46 | 46 | 46 | 46 | 70 |
| $S \times E$ | 6.3 | 6.3 | 6.3 | 6.3 | 6.3 | 6.3 | 6.3 | 9.6 |
| $Y/(S \times E)$ | 3.2 | 3.2 | 3.2 | 3.2 | 4.8 | 3.2 | 2.4 | 1.6 |
| Index | | | | | | | | |
| Fuel efficiency | 105 | 111 | 106 | 118 | 121 | 126 | 113 | 107 |
| Initial adhesion performance | 111 | 115 | 116 | 122 | 133 | 112 | 116 | 111 |
| Durability after hygrothermal aging | 110 | 116 | 115 | 121 | 130 | 111 | 116 | 109 |

EP 4 282 914 A1

<Embodiments>

Examples of embodiments of the present invention are described below.

[1] A tire comprising a steel cord and a topping rubber covering the steel cord,

wherein the steel cord is provided with a ternary plated layer consisting of copper, zinc, and cobalt,
wherein the topping rubber is composed of a rubber composition comprising a rubber component and silica, and
wherein, when a content of zinc in the ternary plated layer is defined as X (% by mass) and a content of silica based on 100 parts by mass of the rubber component is defined as Y (part by mass), Y/X is 0.50 or more, preferably 0.50 or more and 1.80 or less, more preferably 0.53 or more and 1.40 or less.

[2] The tire of [1] above, wherein a content of a guanidine-based vulcanization accelerator based on 100 parts by mass of the rubber component in the rubber composition is 0.1 parts by mass or less.
[3] The tire of [1] or [2] above, wherein the rubber composition further comprises a thermosetting resin and a curing agent.
[4] The tire of any one of [1] to [3] above, wherein Y is 50 parts by mass or less, preferably 10 parts by mass or more and 50 parts by mass or less, more preferably 12 parts by mass or more and 40 parts by mass or less.
[5] The tire of any one of [1] to [4] above, wherein X is 20% by mass or more, preferably 20% by mass or more and 44% by mass or less, more preferably 25% by mass or more and 40% by mass or less.
[6] The tire of any one of [1] to [5] above, wherein the rubber composition further comprises a cobalt compound, preferably an organic acid cobalt.
[7] The tire of any one of [1] to [6] above, wherein an average thickness of the ternary plated layer is 0.10 $\mu$m or more and 0.40 $\mu$m or less, preferably 0.13 $\mu$m or more and 0.35 $\mu$m or less, more preferably 0.16 $\mu$m or more and 0.30 $\mu$m or less.
[8] The tire of any one of [1] to [7] above, wherein a filament diameter of the steel cord is 0.10 mm or more and 0.70 mm or less, preferably 0.16 mm or more and 0.50 mm or less, more preferably 0.22 mm or more and 0.40 mm or less.
[9] The tire of any one of [1] to [8] above, wherein, when a cross-sectional area of the steel cord is defined as S (mm$^2$) and a number of the steel cord placed per width of 50 mm that extends in a direction perpendicular to a longitudinal direction of the steel cord is defined as E, a product (S $\times$ E) of S and E is 5.0 or more and 40.0 or less, preferably 5.0 or more and 30.0 or less, more preferably 6.0 or more and 20.0 or less.
[10] The tire of [9] above, wherein Y/(S $\times$ E) is 0.35 or more, preferably 0.85 or more and 8.9 or less, more preferably 1.1 or more and 6.7 or less.

REFERENCE SIGNS LIST

| | |
|---|---|
| 11 | Tire |
| 12 | Tread part |
| 13 | Sidewall part |
| 14. | Bead part |
| 15 | Inner liner |
| 16 | Carcass |
| 17 | Belt layer |
| 18 | Bead wire |
| 21, 30, 50 | Steel cord |
| 22 | Toping rubber |
| 31, 32, 51 | Filament |
| 311 | Core |
| 321 | Outer sheath |
| CL | Center line |

**Claims**

**1.** A tire comprising a steel cord and a topping rubber covering the steel cord,

wherein the steel cord is provided with a ternary plated layer consisting of copper, zinc, and cobalt,
wherein the topping rubber is composed of a rubber composition comprising a rubber component and silica, and
wherein, when a content of zinc in the ternary plated layer is defined as X (% by mass) and a content of silica based on 100 parts by mass of the rubber component is defined as Y (part by mass), Y/X is 0.50 or more, preferably 0.50 or more and 1.80 or less, more preferably 0.53 or more and 1.40 or less.

2. The tire of claim 1, wherein a content of a guanidine-based vulcanization accelerator based on 100 parts by mass of the rubber component in the rubber composition is 0.1 parts by mass or less.

3. The tire of claim 1 or 2, wherein the rubber composition further comprises a thermosetting resin and a curing agent.

4. The tire of any one of claims 1 to 3, wherein Y is 50 parts by mass or less, preferably 10 parts by mass or more and 50 parts by mass or less, more preferably 12 parts by mass or more and 40 parts by mass or less.

5. The tire of any one of claims 1 to 4, wherein X is 20% by mass or more, preferably 20% by mass or more and 44% by mass or less, more preferably 25% by mass or more and 40% by mass or less.

6. The tire of any one of claims 1 to 5, wherein the rubber composition further comprises a cobalt compound, preferably an organic acid cobalt.

7. The tire of any one of claims 1 to 6, wherein an average thickness of the ternary plated layer is 0.10 $\mu$m or more and 0.40 $\mu$m or less, preferably 0.13 $\mu$m or more and 0.35 $\mu$m or less, more preferably 0.16 $\mu$m or more and 0.30 $\mu$m or less.

8. The tire of any one of claims 1 to 7, wherein, when a filament diameter of the steel cord is 0.10 mm or more and 0.70 mm or less, preferably 0.16 mm or more and 0.50 mm or less, more preferably 0.22 mm or more and 0.40 mm or less.

9. The tire of any one of claims 1 to 8, wherein, when a cross-sectional area of the steel cord is defined as S (mm$^2$) and a number of the steel cord placed per width of 50 mm that extends in a direction perpendicular to a longitudinal direction of the steel cord is defined as E, a product (S $\times$ E) of S and E is 5.0 or more and 40.0 or less, preferably 5.0 or more and 30.0 or less, more preferably 6.0 or more and 20.0 or less.

10. The tire of claim 9, wherein Y/(S $\times$ E) is 0.35 or more, preferably 0.85 or more and 8.9 or less, more preferably 1.1 or more and 6.7 or less.

# FIG. 1

# FIG.2

# FIG. 3

FIG. 4

# FIG.5

Europäisches
Patentamt

European
Patent Office

Office européen
des brevets

# EUROPEAN SEARCH REPORT

**Application Number**

EP 23 16 7769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/145275 A1 (BRIDGESTONE CORP [JP]) 16 July 2020 (2020-07-16) * claims 1,3,5,8 * * examples 1,6 * | 1-10 | INV. C08L21/00 C08K3/36 B60C9/00 |
| X,P | WO 2022/207996 A1 (MICHELIN & CIE [FR]) 6 October 2022 (2022-10-06) * claims 1,12,15 * * Example C10 * | 1-10 | |
| A | WO 2021/029378 A1 (BRIDGESTONE CORP [JP]) 18 February 2021 (2021-02-18) * examples 1-3,6 * * paragraph [0139] * | 1-10 | |
| A | EP 3 981 911 A1 (BRIDGESTONE CORP [JP]) 13 April 2022 (2022-04-13) * examples 1,3,5; table 2 * | 1-10 | |

**TECHNICAL FIELDS SEARCHED (IPC)**

B60C
C08L
C09D
C08K

The present search report has been drawn up for all claims

| Place of search | Date of completion of the search | Examiner |
|---|---|---|
| Munich | 6 June 2023 | Baekelmans, Didier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7769

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2023

| Patent document cited in search report | | Publication date | Patent family member(s) | | Publication date |
|---|---|---|---|---|---|
| WO 2020145275 | A1 | 16-07-2020 | JP WO2020145275 | A1 | 25-11-2021 |
| | | | WO 2020145275 | A1 | 16-07-2020 |
| WO 2022207996 | A1 | 06-10-2022 | FR 3121145 | A1 | 30-09-2022 |
| | | | WO 2022207996 | A1 | 06-10-2022 |
| WO 2021029378 | A1 | 18-02-2021 | CN 114222840 | A | 22-03-2022 |
| | | | EP 4015704 | A1 | 22-06-2022 |
| | | | JP WO2021029378 | A1 | 18-02-2021 |
| | | | WO 2021029378 | A1 | 18-02-2021 |
| EP 3981911 | A1 | 13-04-2022 | CN 113840958 | A | 24-12-2021 |
| | | | EP 3981911 | A1 | 13-04-2022 |
| | | | JP WO2020246569 | A1 | 10-12-2020 |
| | | | US 2022219490 | A1 | 14-07-2022 |
| | | | WO 2020246569 | A1 | 10-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015511998 A